Europäisches Patentamt

European Patent Office

Office européen des brevets

(11) Veröffentlichungsnummer: **0 425 880 A1**

# EUROPÄISCHE PATENTANMELDUNG

(21) Anmeldenummer: 90119727.7

(22) Anmeldetag: 15.10.90

(51) Int. Cl.⁵: **F16F 1/18**

(30) Priorität: 27.10.89 DE 3935795

(43) Veröffentlichungstag der Anmeldung:
08.05.91 Patentblatt 91/19

(84) Benannte Vertragsstaaten:
AT BE CH DE ES FR GB IT LI NL SE

(71) Anmelder: BASF Aktiengesellschaft
Carl-Bosch-Strasse 38
W-6700 Ludwigshafen(DE)

(72) Erfinder: Minor, Roman
Scheffelstrasse 4
W-6711 Laumersheim(DE)
Erfinder: Woltron, Herbert
Bachweg 1
W-6520 Worms(DE)

(54) Blattfeder aus Faserverbundwerkstoff.

(57) Für die Krafteinleitung bei Blattfedern sind an den Enden sowie zwischen diesen Enden eines im wesentlichen einheitlichen länglichen Federkörpers (1) aus Faserverbundwerkstoff Befestigungseinrichtungen (2, 9) vorgesehen. Die Befestigungseinrichtungen enthalten wenigstens ein metallisches Krafteinleitungselement (4, 10), welches unter Einschluß einer Zwischenschicht (5, 13) auf sich gegenüberliegenden Flächen des Federkörpers angeordnet ist. Die Zwischenschicht besteht aus einem gießfähigen Kunststoff und verbindet während ihrer Ausbildung das Krafteinleitungselement und den Federkörper.

FIG.1/2

EP 0 425 880 A1

## BLATTFEDER AUS FASERVERBUNDWERKSTOFF

Die Erfindung betrifft eine Blattfeder aus Faserverbundwerkstoff entsprechend dem Oberbegriff des Anspruchs 1.

Bei Blattfedern aus Faserverbundwerkstoffen wirft deren Befestigung beispielsweise zwischen Achse und Aufbau eines Kraftfahrzeuges erhebliche Probleme auf. Ein direktes Verbinden der Federn an den Federaugen oder an der Mitteneinspannung mit Metallanschlußteilen ist nicht möglich, da bei üblicher dynamischer Federbeanspruchung Schädigungen am Faserverbundwerkstoff nicht zu vermeiden wären. Die Eigenart des Faserverbundwerkstoffes verbietet auch Bohrungen senkrecht zum Federkörper im Bereich hoher Beanspruchungen.

Aus der DE-OS 32 22 079 ist eine Blattfeder mit Endbeschlägen und einer Befestigungseinrichtung zwischen den Federenden bekannt, bei der zwecks Minderung von Spannungsspitzen Zwischenlagen aus Gummi vorgesehen sind. Derartige Zwischenlagen befriedigen jedoch nicht in jeder Hinsicht. Gummiwerkstoffe ertragen zwar die in Krafteinleitungsbereichen auftretenden hohen Dehnungen und mindern den großen Steifigkeitssprung vom Faserverbundwerkstoff zum Metall, bewirken aber bei Einwirkung oder Aufhebung äußere Kräfte eine Verzögerung der Einstellung des Gleichgewichtszustandes. Dadurch lockert sich die Klemmverbindung zwischen metallischen Krafteinleitungsteilen und Federkörper. Bei dynamischer Belastung der Blattfeder ergeben sich Verschiebungen zwischen den einzelnen Teilen der Befestigungseinrichtung und damit nicht kontrollierbare Kraftumlagerungen sowie erhöhter Verschleiß.

Weiterhin beschreibt die EP-A-0 240 676 eine Vorrichtung für die Mitteneinspannung einer Blattfeder mit gegeneinander nicht verschiebbaren Käfighälften, die mittels Spannelementen gegen den Federkörper gedrückt werden. Im Bereich der Käfighälften sind dabei mechanisch steife Auflagen aus faserverstärktem Kunststoff an der Ober- und Unterseite, der Federkörpers befestigt. Die Herstellung und Montage der Auflagen erfordert indes zusätzlichen Arbeitsaufwand, so daß derartige Blattfedern für eine Großserienfertigung nur bedingt geeignet sind. Darüber hinaus ist es paktisch nicht möglich, Ungenauigkeiten, z.B. Abweichungen in der Federsprengung oder am Anbindungselement auszugleichen. Hieraus resultieren entsprechend hohe Anforderungen an die Fertigungstoleranz der Blattfeder und der Anbindungselemente.

Mit der Erfindung soll eine Blattfeder aus Faserverbundwerkstoff geschaffen werden, welche die vorstehend geschilderten Nachteile vermeidet und insbesondere leicht mit Befestigungseinrichtungen zu verbinden ist. Als Besonderheit ist zusätzlich gefordert, daß eine Spaltbildung an den Übergängen zwischen Federkörper und den Befestigungseinrichtungen nicht entsteht.

Zur Lösung dieser Aufgabe werden die Maßnahmen nach dem Kennzeichen des Anspruchs 1 vorgeschlagen.

Erfindungsgemäß werden der Federkörper und die den Federkörper umschließenden Befestigungseinrichtungen durch eine Zwischenschicht form-und stoffschlüssig miteinander verbunden. Dieses geschieht dadurch, daß gießfähiger Kunststoff in den Raum zwischen Federkörper und der jeweiligen Befestigungseinrichtung eingebracht wird und nach seiner Erstarrung die Zwischenschicht ausbildet. Aufwendige Klebeverbindungen zwischen Federkörper und den Befestigungseinrichtungen sind somit nicht erforderlich.

Der Kunststoffeintrag kann nach an sich bekannten Verfahren, beispielsweise Gießen oder Spritzgießen erfolgen, wobei die Formwerkzeuge gleichzeitig als Positionierhilfen verwendet werden können. Die Befestigungseinrichtungen werden in den Formwerkzeugen fixiert und der Federkörper dazu ausgerichtet. Auf diese Weise ist es möglich, Fertigungsungenauigkeiten, wie Abweichungen in der Federsprengung, Einfallstellen oder Verdrehung des Federkörpers, in der Größenordnung der Zwischenschichtdicke auszugleichen, da der gießfähige Kunststoff die unterschiedlichen Spaltweiten zwischen Federkörper und Befestigungseinrichtung ohne weiteres überbrückt.

Als Kunststoffe für die Zwischenschicht kommen sowohl härtbare Kunstharze, z.B. ungesättigte Polyesterharze, modifizierte Epoxyharze, modifizierte Polyurethanharze oder Mischungen dieser Harze, als auch thermoplastisch verarbeitbare Kunststoffe, wie Polyethylen, Polypropylen, Polyamide oder Polymethylmethacrylat, sowie Elastomere in Betracht. Diese Kunststoffe können die üblichen Zusatzstoffe, beispielsweise faserige Füllstoffe enthalten, wobei der Faseranteil vorzugsweise 15 bis 50 Gew.-% betragen kann. Je nach verwendetem Kunststoff hat sich eine Dicke der Zwischenschicht von etwa 1 bis 3 mm insgesamt als zweckmäßig erwiesen. Eine Zwischenschicht dieser Beschaffenheit gewährleistet eine praktisch vorspannungsfreie Anbindung von Befestigungseinrichtungen an den Federkörper. Spannungsspitzen werden weitgehend vermieden. Entsprechend gering ist damit auch die Gefahr des Relaxierens. Durch die form- und stoffschlüssige Verbindung entstehen auch keine Spalte, in die Feuchtigkeit oder Schmutzpartikel eindringen könnten.

Zweckmäßige Weiterbildungen der erfindungsgemäßen Blattfeder sind Gegenstand der Unteransprüche 2 bis 4.

Die Erfindung wird nachfolgend unter Hinweis auf die Zeichnungen näher erläutert. Es zeigt

Figur 1 eine Blattfeder mit Befestigungseinrichtungen an den Enden des Federkörpers sowie zwischen diesen Enden im Längsschnitt,

Figur 2 eine Befestigungseinrichtung an einem Ende des Federkörpers, teilweise geschnitten,

Figur 3 eine Aufsicht der Befestigungseinrichtung entsprechend Figur 2,

Figur 4 eine Befestigungseinrichtung zwischen den Federenden im Längsschnitt und

Figur 5 die Befestigungseinrichtung nach Figur 4 im Querschnitt.

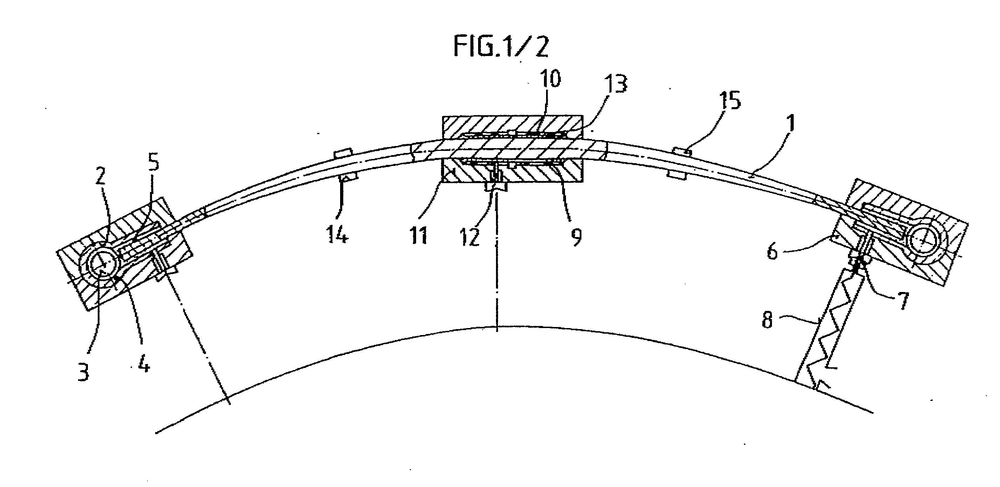

Gemäß Figur 1 ist der Federkörper aus Faserverbundwerkstoff mit (1) bezeichnet. An den Enden des im wesentlichen einheitlichen länglichen Federkörpers ist jeweils eine Befestigungseinrichtung (2) vorgesehen. Diese besteht aus einem Federauge (3) und einem Krafteinleitungselement (4), welches sowohl das Federauge als auch das Federende umschließt, wobei zwischen den freien Enden des Krafteinleitungselements und dem Federkörper ein Abstand zur Ausbildung einer Zwischenschicht (5) verbleibt. Zur Herstellung dieser Zwischenschicht, die den Federkörper und das Krafteinleitungselement form- und stoffschlüssig miteinander verbindet, ist die Befestigungseinrichtung (2) in einem Formwerkzeug (6) eingesetzt. Das Formwerkzeug enthält einen Anguß (7), der mit einer entsprechenden Öffnung in dem Krafteinleitungselement in Beziehung steht. Durch den Anguß des Formwerkzeuges und die Öffnung des Krafteinleitung selementes erfolgt die Zufuhr von gießfähigem Kunststoff. Eine Fördereinrichtung (8) ist angedeutet.

Zwischen den Enden des Federkörpers (1) ist eine weitere Befestigungseinrichtung (9) angebracht, deren Krafteinleitungselement (10) zweigeteilt ist. Die Teile des Krafteinleitungselements sind in einem Formwerkzeug (11) mit einem Anguß (12) angebracht, wobei ein Teil eine Öffnung aufweist, über die der Eintrag von gießfähigem Kunststoff zur Ausbildung einer Zwischenschicht (13) erfolgt. Mit (14) und (15) sind Positioniereinrichtungen auf dem Federkörper (1) bezeichnet.

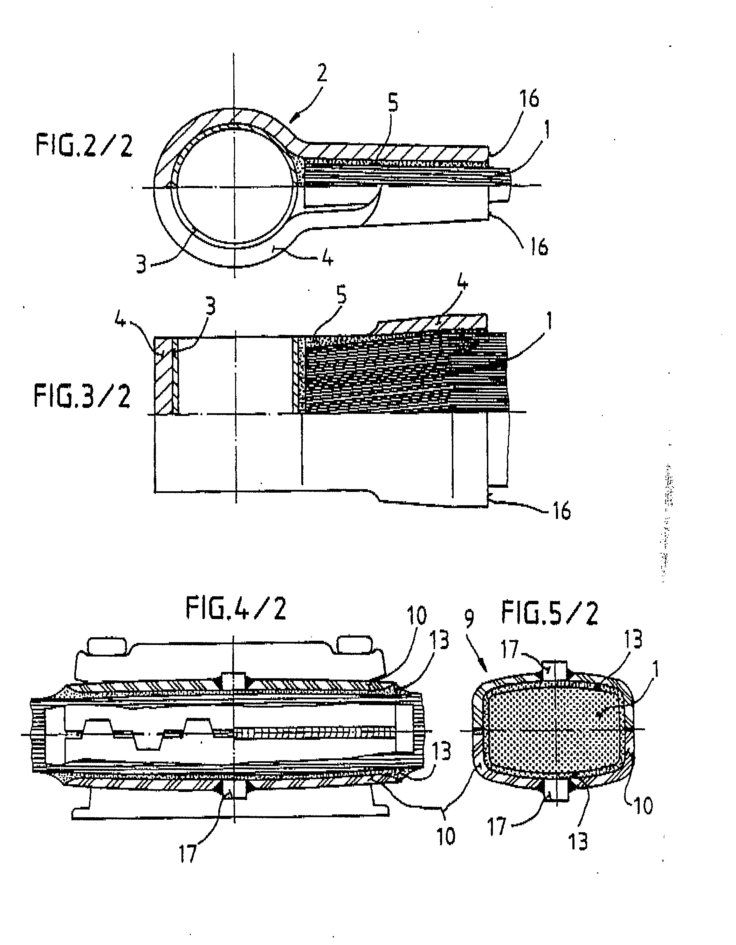

Bei dem Ausführungsbeispiel nach den Figuren 2 und 3 ist das Ende des Federkörpers (1) bei gleichbleibender Querschnittsfläche in seiner Breite verkleinert und in seiner Dicke vergrößert. Die Dickenzunahme läßt sich bereits beim Herstellen des Federkörpers durch einen an dieser Stelle höheren Harzanteil erreichen; die Verkleinerung der Federbreite erfolgt durch mechanische Bearbeitung. Es entstehen jeweils zwei gegenüberliegende und in der Neigung entgegengesetzte Keile. Die das Ende des Federkörpers umfassende Befestigungseinrichtung (2) besteht aus einem Federauge (3) und einem Krafteinleitungselement (4). Das Krafteinleitungselement ist aus einem ringförmig gebogenen Stahlblech gefertigt, das zum Federkörper hin in zwei Verbindungslaschen (16) endet. Die beiden Laschen sind auf den Längsseiten durch Stege verbunden, wobei die Neigungen der Laschen und der Stege den Keilflächen des Federkörpers entsprechen. Dabei ist die von den Laschen und Stegen gebildete Öffnung so bemessen, daß die Befestigungseinrichtung auf das Federende aufgeschoben werden kann. Es entsteht um das Ende des Federkörpers ein Ringraum mit im wesentlichen parallel zueinander ausgerichteten Flächen, der zur Ausbildung der Zwischenschicht (5) mit Kunststoff ausgegossen wird. Dabei umschließt die Zwischenschicht den Federkörper vollständig, so daß sich eine besonders innige Verbindung zwischen dem Krafteinleitungselement (4) und dem Federkörper (1) ergibt. Die Zwischenschicht kann Zugkräfte durch die Vergrößerung der Dicke des Federendes, Druckkräfte durch die Verkleinerung der Federbreite und Seitenkräfte durch die Stege großflächig von dem Federkörper in ein Anschlußelement übertragen. Zum Übertragen dieser Kräfte ist keine auf die maximale Belastung ausgelegte permanente Vorspannung erforderlich. Bei der erfindungsgemäßen Blattfeder ist die notwendige Spannkraft dem momentanen Belastungsfall immer proportional.

Die Befestigungseinrichtung (9) zur Mitteneinspannung des Federkörpers (1) entsprechend den Figuren 4 und 5 enthält ein aus zwei U-Profilen gebildetes Krafteinleitungselement (10). Im Einspannbereich, ist der Federkörper zweifach bombiert, d.h. auf der Ober- und Unterseite sowohl in Längs- als auch in Querrichtung mit einer erhabenen Wölbung versehen. Die Stege der U-Profile sind entsprechend ausgebildet, so daß eine ebenfalls gewölbte Zwischenschicht (13) entsteht, wenn der Raum zwischen dem Krafteinleitungselement und dem Federkörper ausgegossen wird. Die Flansche der U-Profile können eben und miteinander verschweißt oder nicht-eben und komplementär zueinander ausgebildet sein. Durch die Zwischenschicht ist eine form- und stoffschlüssige Verbindung sowohl in Längs- als auch in Querrichtung des Federkörpers gegeben. Das Krafteinleitungselement ist auf dem Federkörper nicht verschiebbar und die Herzbolzen (17) können ohne Verlust an Positioniergenauigkeit von dem Federkörper in das Krafteinleitungselement verlegt werden.

**Ansprüche**

1. Blattfeder aus Faserverbundwerkstoff mit einem im wesentlichen einheitlichen länglichen Federkörper (1) und Befestigungseinrichtungen (2, 9) an den Enden des Federkörpers sowie zwischen diesen Enden, wobei die Befestigungseinrichtungen wenigstens ein metallisches Krafteinleitungselement (4, 10) aufweisen, welches unter Einschluß einer Zwischenschicht (5, 13) auf sich gegenüberliegenden Flächen des Federkörpers angeordnet ist, dadurch gekennzeichnet, daß die Zwischenschicht (5, 13) aus einem gießfähigen Kunststoff besteht und während ihrer Ausbildung das Krafteinleitungselement (4, 10) und den Federkörper (1) form- und stoffschlüssig miteinander verbindet.

2. Blattfeder nach Anspruch 1, dadurch gekennzeichnet, daß die Zwischenschicht (5, 13) den Federkörper (1) jeweils vollständig umschließt.

3. Blattfeder nach den Ansprüchen 1 und 2, dadurch gekennzeichnet, daß die die Zwischenschicht (5, 13) einschließenden Flächen des Federkörpers (1) und des Krafteinleitungselements (4, 10) insgesamt nicht-eben ausgebildet sind.

4. Blattfeder nach den Ansprüchen 1 und 2, dadurch gekennzeichnet, daß wenigstens ein Ende des Federkörpers (1) keilförmig ausgebildet ist und das Krafteinleitungselement (4) den Federkörper derart umfaßt, daß die die Zwischenschicht (5) einschließenden Flächen des Federkörpers und des Krafteinleitungselements im wesentlichen parallel zueinander ausgerichtet sind.

FIG.1/2

FIG.2/2

FIG.3/2

FIG.4/2

FIG.5/2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 602 886 (GKN TECHNOLOGY LTD) * Seite 2, Zeile 6 - Seite 3, Zeile 8; Seite 4, Zeile 12 - Seite 5, Zeile 7; Ansprüche 1-4,6; Figuren 1-3,4,5 * | 1,2 | F 16 F 1/18 |
| A | | 3,4 | |
| Y | EP-A-0 215 365 (TECHNO ARBED DEUTSCHLAND) * Spalte 3, Zeilen 9-35; Figur 2 * | 1 | |
| Y | DE-C-3 613 804 (AUDI AG) * Spalte 3, Zeilen 9-33; Figur 1 * | 1 | |
| A | | 2,3,4 | |
| A | WO-A-8 600 266 (GKN TECHNOLOGY LTD) * Seite 6, Zeilen 15-28; Seite 7, Zeilen 26-29; Figur 2 * | 1-3 | |
| A | FR-A-2 570 032 (CENTRE DE RECHERCHE DES RESSORTS) * Seite 3, Zeilen 10-31; Figuren 1,4,5 * | 1-3 | |
| | | | RECHERCHIERTE SACHGEBIETE (Int. Cl.5) |
| A | EP-A-0 178 286 (BÖHLER AG) * Seite 7, Zeilen 1-31; Figur 2 * | 1-3 | F 16 F B 29 C |
| A | EP-A-0 243 267 (BERTIN & CIE) * Seite 7, Zeilen 14-19; Figur 5 * | 1,2 | |

Der vorliegende Recherchenbericht wurde für alle Patentansprüche erstellt

| Recherchenort | Abschlußdatum der Recherche | Prüfer |
|---|---|---|
| DEN HAAG | 01-02-1991 | BRUNELLO B. |